# EUROPÄISCHE PATENTSCHRIFT

(11) **EP 1 375 551 B1**
(45) Veröffentlichungstag und Bekanntmachung des Hinweises auf die Patenterteilung: **08.11.2006**
(21) Anmeldenummer: 03012668.4
(22) Anmeldetag: 04.06.2003
(51) Int. Cl.: C08G 18/80, C09D 175/04

(54) **Neue Blockierungsmittel für nichtwässrige Polyisocyanate auf Basis von Aralkylaminen**
Aralkylamine blocking agents for non-aqueous polyisocyanate
Agents de blocage d'aralkylamine pour polyisocyanates non-aqeux

(30) Priorität: 17.06.2002 DE 10226925
(43) Veröffentlichungstag der Anmeldung: 02.01.2004
(73) Patentinhaber: Bayer MaterialScience AG, 51368 Leverkusen (DE)
(72) Erfinder: Gürtler, Christoph, Dr., 50676 Köln (DE); Mazanek, Jan, Dr., 51061 Köln (DE); Petzoldt, Joachim, Dr., 40789 Monheim (DE); Klimmasch, Thomas, 51379 Leverkusen (DE); Müller, Heino, 51375 Leverkusen (DE)

(56) Entgegenhaltungen:
- EP-A- 0 096 210
- EP-A- 0 178 398
- EP-A- 0 407 829
- EP-A- 0 600 314

## Beschreibung

Die vorliegende Erfindung betrifft neue Blockierungsmittel für Polyisocyanate auf der Basis von sekundären Benzylaminen und deren Verwendung bei der Herstellung von blockierten Polyisocyanaten und selbstvemetzenden Einkomponenten-Einbrennsystemen.

Der Einsatz von Blockierungsmitteln zum temporären Schutz von Isocyanatgruppen ist seit langem bekannt. Blockierte Polyisocyanate werden zur Herstellung von bei Raumtemperatur lagerstabilen, in der Hitze härtbaren 1K-PUR-Einbrennsystemen eingesetzt. Die blockierten Polyisocyanate werden dabei z.B. mit Hydroxylgruppen enthaltenden Polyestem, Polyacrylaten, anderen Polymeren sowie weiteren Bestandteilen von Lacken und Farben wie Pigmenten, Colösern oder Additiven vermischt. Eine andere Möglichkeit, bei Raumtemperatur lagerstabile Einbrennlacke zu erhalten, ist die teilweise Blockierung der Isocyanatgruppen von Polymeren, die sowohl blockierte Isocyanate als auch Hydroxylgruppen erhalten.

Die wichtigsten Verbindungen, die zur Blockierung von Polyisocyanaten eingesetzt werden, sind ε-Caprolactam, Methyl-ethyl-ketoxim (Butanonoxim), Malonsäurediethylester, sekundäre Amine sowie Triazol- und Pyrazolderivate, so wie sie z.B. in EP-A 576 952, EP-A 566953, EP-A 159117, US-A 4482 721, WO 97/12924 oder EP-A 744 423 beschrieben sind.

Sekundäre Amine werden als Blockierungsmittel in der EP-A 96210 beschrieben. Dort werden zwar auch Aralkyl-substituierte Amine als Blockierungsmittel beansprucht, ihre Anwendung wird aber in den Beispielen nicht offenbart. Der Einsatz solcher Amine in wässrigen Systemen ist in der EP-A 96210 nicht genannt.

Die allgemeine Formel der Blockierungsmittel auf S. 2, Zeilen 20-24 oder EP-A 96210 lässt eine unendlich große Anzahl solcher Diamine zu. Auf S. 3, Zeilen 8ff. der gleichen Schrift wird aber darauf hingewiesen, das nicht alle sekundären Amine sich als erfindungsgemäße Verbindungen eignen. Auf Seite 5, Zeilen 20-29 ist eine äußerst begrenzte Anzahl solcher Diamine aufgeführt. Auch die Beispiele auf den Seiten 9 und 10 betreffen lediglich Dialkylamine wie Diisopropylamin, substituierte sekundäre cycloaliphatische Amine wie substituiertes Cyclohexylamin oder cycloaliphatische N-Heterocyclen wie 2,2,4,6-Tetramethylpiperidin. Mit Ausnahme von Diisopropylamin werden diese Verbindungen mit Isocyanaten bei Temperaturen von mindestens 120°C umgesetzt, so dass der Fachmann davon ausgehen muss, dass die zur weiteren Umsetzung notwendige Abspaltung dieser Blockierungsmittel erst bei deutlich höheren Temperaturen stattfindet.

In der EP-A 178398 wurde festes blockiertes Isophorondiisocyanat als Härter für Pulverlacke beansprucht. Auch hier wurden Aralkyl-substituierte sekundäre Amine als Blockierungsmittel beansprucht und tert.-Butyl-benzylamin genannt, allerdings ohne ein konkretes Beispiel. In der EP-A 787754 wurden solche Blockierungsmittel für ausgewählte Polyisocyanate als Härter für Pulverlacke beansprucht; tert.-Butylbenzylamin oder andere Aralkyl-substituierte Diamine werden jedoch nicht genannt. Andere flüssige lösemittelhaltige Zubereitungen oder wässrige bzw. wasserverdünnbare blockierte Polyisocyanate sind in beiden Dokumenten nicht genannt.

Die am häufigsten eingesetzten Blockierungsmittel für Isocyanate sind ε-Caprolactam und Butanonoxim. Während bei ε-Caprolactam in der Regel Einbrenntemperaturen um 160°C angewandt werden, können blockierte 1K-Einbrennlacke, bei denen Butanonoxim als Blockierungsmittel eingesetzt wurde, schon bei 10 bis 20°C niedrigeren Temperaturen eingebrannt werden. Allerdings werden bei diesen Einbrenntemperaturen in manchen Lacksystemen die gewünschten Lackeigenschaften nicht mehr erreicht. Aber auch diese Temperaturen werden einstweilen als zu hoch empfunden, so dass der Bedarf nach Einbrennsystemen entstanden ist, die bei niedrigeren Temperaturen vollständig vernetzen als beim Einsatz von Butanonoxim.

Aufgabe der vorliegenden Erfindung ist somit, blockierte Polyisocyanate zu finden, die eine niedrigere Vernetzungs- bzw. Einbrenntemperatur aufweisen als butanonoximblockierte Polyisocyanate. Sie sollen dabei eine gleich große oder niedrigere Thermovergilbung beim Überbrennen zeigen als Butanonoxim blockierte Systeme.

Diese Aufgabe wurde mit dem erfindungsgemäßen blockierten Polyisocyanaten und diese enthaltenden selbstvemetzenden Einkomponenten-Einbrennsystemen gelöst.

Gegenstand der vorliegenden Erfindung sind blockierte Polyisocyanate und selbstvernetzende 1K-Einbrennsysteme auf Polyurethanbasis der Formel (I) 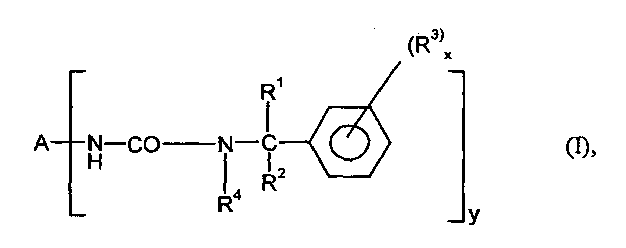 worin
- A: den Rest eines Polyisocyanats bedeutet,
- R¹, R², R³: gleich oder verschieden sein können und Wasserstoff, C₁-C₄-Alkyl oder Cycloalkyl bedeuten, wobei Wasserstoff bevorzugt ist, und
- R⁴: C₁-C₄-Alkyl, C₆-C₁₀-Cycloalkyl oder C₇-C₁₄-Aralkyl, bevorzugt Methyl, Ethyl, Isopropyl und tert.-Butyl, besonders bevorzugt tert.-Butyl bedeuten,
- x: für die Zahl 1, 2, 3, 4 oder 5 steht und
- y: eine Zahl von 1 bis 8, bevorzugt 2 bis 6, besonders bevorzugt 2,5 bis 4,0 bedeutet,
entspricht.

Gegenstand der Erfindung ist auch ein Verfahren zur Herstellung der blockierten Polyisocyanate der Formel (I) dadurch gekennzeichnet, dass Polyisocyanate mit sekundären Aminen der allgemeinen Formel (II) 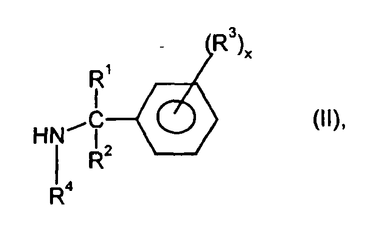 worin R¹, R², R³ und R⁴ und x die bei Formel (T) genannte Bedeutung haben,
umgesetzt werden.

Besonders bevorzugt werden unsymmetrische substituierte sekundäre Amine der Formel (II), d.h. sekundäre Amine mit zwei unterschiedlichen Substituenten eingesetzt.

Ein weiterer Gegenstand der Erfindung ist die Verwendung der erfindungsgemäßen blockierten Polyisocyanate zur Herstellung von Lacken, Farben und anderen Einbrennsystemen wie Klebstoffen oder Elastomeren sowie als Zusatz bei der Vulkanisation von Kautschuken, sowie Gegenstände aus diesen Materialien, die damit beschichtet sind.

Als Polyisocyanate im Sinne der Erfindung können alle bekannten aliphatischen, cycloaliphatischen und aromatischen Polyisocyanate mit einem Isocyanatgehalt von 0,5 bis 50, bevorzugt 3 bis 30, besonders bevorzugt 5 bis 25 Gew.-%, eingesetzt werden, z.B. Tetramethylen-diisocyanat, Cyclohexan-1,3- und 1,4-diisocyanat, Hexamethylendisocyanat (HDI), 1-Isocyanato-3,3,5-trimethyl-5-Isocyanato-methylcyclohexan (Isophorondiisocyanat, IPDI), Methylen-bis-(4-isocyanatocyclohexan), Tetramethylxylylendiisocyanat (TMXDI), Triisocyanatononan.

Weiterhin geeignet sind aromatische Polyisocyanate wie Toluylendiisocyanat (TDI), Diphenylmethan-2,4'-und/oder 4,4'-diisocyanat (MDI), Triphenylmethan-4,4'-diisocyanat, Naphtylen-1,5-diisocyanat.

Bevorzugt geeignet sind Polyisocyanate, die Heteroatome in dem die Isocyanatgruppen enthaltenden Rest enthalten. Beispiele hierfür sind Carbodiimidgruppen, Allophanatgruppen, Isocyanuratgruppen, Urethangruppen und Biuretgruppen aufweisende Polyisocyanate. Besonders gut für die Erfindung geeignet sind die bekannten Polyisocyanate, die hauptsächlich bei der Herstellung von Lacken eingesetzt werden, z.B. Biuret-, Isocyanurat- oder Uretdiongruppen aufweisende Modifizierungsprodukte der oben genannten einfachen Polyisocyanate, insbesondere des Hexamethylendiisocyanats oder des Isophorondiisocyanats. Weiterhin geeignet sind niedermolekulare, Urethangruppen enthaltende Polyisocyanate, wie sie durch Umsetzung von im Überschuß eingesetztem IPDI oder TDI mit einfachen mehrwertigen Alkoholen des Molekulargewichtsbereiches 62 bis 300, insbesondere mit Trimethylolpropan oder Glycerin, erhalten werden können.

Geeignete Polyisocyanate sind ferner die bekannten, endständige Isocyanatgruppen aufweisende Präpolymere, wie sie insbesondere durch Umsetzung der oben genannten einfachen Polyisocyanate, vorzugsweise Diisocyanate, mit unterschüssigen Mengen an organischen Verbindungen mit mindestens zwei gegenüber Isocyanaten reaktionsfähigen fünktionellen Gruppen zugänglich sind. In diesen bekannten Prepolymeren entspricht das Verhältnis von Isocyanatgruppen zu gegenüber NCO reaktiven Wasserstoffatomen 1,05:1 bis 10:1, vorzugsweise 1,1:1 bis 3:1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden vorzugsweise so gewählt, dass die NCO-Prepolymeren vorzugsweise eine mittlere NCO-Funktionalität von 2 bis 3 und ein Zahlenmittel der Molmasse von 500 bis 10000, vorzugsweise 800 bis 4000 aufweisen.

Weiterhin sind als Polyisocyanate im Sinne der Erfindung solche freie Isocyanatgruppen enthaltenden Polymere auf Polyurethan-, Polyester- und/oder Polyacrylat-Basis sowie gegebenenfalls deren Gemische geeignet, bei denen nur ein Teil der freien Isocyanatgruppen mit den erfindungsgemäßen Blockierungsmitteln umgesetzt wird, während der restliche Teil mit einem Überschuss an Hydroxylgruppen enthaltenden Polyestern, Polyurethanen und/oder Polyacrylaten sowie gegebenenfalls deren Gemischen umgesetzt wird, so dass ein freie Hydroxygruppen enthaltendes Polymer entsteht, das beim Erhitzen auf geeignete Einbrenntemperaturen ohne Zugabe weiterer Isocyanatgruppen reaktionsfähigen Gruppen vernetzt (selbstvernetzende Einkomponenten-Einbrennsysteme).

Selbstverständlich können die genannten Polyisocyanate auch als Gemische untereinander oder auch mit anderen Vernetzern wie mit Melaminharzen zur Herstellung von Lacken, Farben und anderen Formulierungen eingesetzt werden.

Die Herstellung der erfindungsgemäßen blockierten Polyisocyanate kann nach an sich bekannten Methoden erfolgen. Beispielsweise können ein oder mehrere Polyisocyanate vorgelegt und das Blockierungsmittel (beispielsweise während etwa 10 Min.) unter Rühren zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren Blockierungsmitteln zu blockieren.

Bevorzugt ist eine Herstellung der erfindungsgemäßen blockierten Polyisocyanate in Lösungsmitteln. Im Gegensatz zu den in herkömmlicher Weise verwendeten Aminen bieten nicht symmetrische sekundäre Amine im Gegensatz zu symmetrischen sekundären Aminen den Vorteil, dass die Lösungen der mit ihnen hergestellten blockierten Polyisocyanate eine geringere Kristallisationsneigung aufweisen. Damit gelingt es, Lösungen aus blockierten Polyisocyanaten mit höherem Feststoffgehalt, z.B. für die Bereiche Coil Coating, High-Solid-Lacke oder Automobildecklacke herzustellen. Als Lösungsmittel kommen alle bekannten Lösungsmittel in Frage, die keine gegenüber Isocyanaten-reaktive Gruppen besitzen, beispielsweise Xylol, N-Methylpyrrolidon, Butylacetat, höhersiedende Aliphaten und/oder Aromaten, Butyldiglykolacetat, Aceton usw..

Bei der Herstellung der erfmdungsgemäßen Polyisocyanaten können auch Katalysatoren, Colöser und andere Hilfsmittel und Additive verwendet werden.

Die erfindungsgemäßen blockierten Polyisocyanate werden als selbstvemetzende Einkomponenten-Einbrennsysteme verwendet. Sie werden ebenso zur Herstellung von Bindemitteln für Lacke, für Lacke, Farben und andere Einbrennsysteme wie Klebstoffe und Elastomere verwendet und als Vernetzer (Komponente) für Polyolkomponten.

Die erfindungsgemäßen Polyisocyanate sind, wie oben beschrieben, entweder selbstvernetzende Polymere oder sie können auch als Vernetzer für Polyolkomponenten verwendet werden. Als Polyolkomponenten, die auch als Gemische eingesetzt werden können, kommen in Betracht:

Polyhydroxypolyester, Polyhydroxypolyether oder Hydroxylgruppen aufweisende Polymerisate, z.B. die an sich bekannten Polyhydroxypolyacrylate. Die Verbindungen weisen im Allgemeinen eine Hydroxylzahl von 20 bis 200, vorzugsweise von 50 bis 130, bezogen auf 100 %ige Produkte, auf.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-,3- oder 4-Hydroxybutylester dieser Säuren mitverwendet werden.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol, Tri-methylolpropan, Glycerin und/oder Pentaerythrit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid; Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Die gegebenenfalls erforderliche hydrophile Modifizierung dieser Polyhydroxylverbindungen erfolgt nach an sich bekannten Methoden, wie sie beispielsweise in EP-A-0 157 291 oder EP-A-0 427 028 beschrieben sind.

Die Herstellung der Lacke, Farben und anderen Formulierungen unter Verwendung der erfindungsgemäßen Polyisocyanaten erfolgt nach an sich bekannten Methoden. Außer den Polyisocyanaten und Polyolen können den Formulierungen übliche Additive und andere Hilfsstoffe (z.B. Pigmente, Füllstoffe, Verlaufsmittel, Entschäumer, Katalysatoren) in durch den Fachmann leicht zu ermittelnden Mengen zugesetzt werden.

Die erfindungsgemäßen blockierten Polyisocyanate werden zur Herstellung von Einbrennlacken, z.B. für die Industrielackierung und bei der Automobilerstlackierung verwendet. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10 bis 120 µm liegen. Das Aushärten der getrockneten Filme erfolgt durch Einbrennen in Temperaturbereichen von 90 bis 160°C, bevorzugt 110 bis 140°C, besonders bevorzugt bei 120 bis 130°C.

Wie der **Tabelle 1** zu entnehmen ist, zeigt das neue Blockierungsmittel bei einer Einbrenntemperatur von 120°C vergleichbare Eigenschaften wie ein Polyisocyanat, das mit DMP blockiert wurde und bei 140°C eingebrannt wurde.

Unter diesen Bedingungen zeigen die erfindungsgemäß blockierten Polyisocyanate, die mit dem Blockierungsmittel tert.Butyl-benzylamin blockiert sind, gleichzeitig ein dem bisher diesbezüglich bestem Blockierungsmittel DMP vergleichbares thermisches Überbrennverhalten auf einem lösungsmittelhaltigen Basislack (siehe Vergleich mit DMP blockierten Polyisocyanat). Damit werden bessere Überbrennvergilbungen erhalten als mit Butanonoxim blockierten Typen.

### Beispiele

Partikelgrößen wurden durch Laserkorrelationsspektroskopie (LSK) bestimmt

### Beispiel 1 (Herstellung eines lösungsmittelhaltigen Polyisocyanat-Vernetzers)

117 g (0,6 Val) eines handelsüblichen isocyanurathaltigen Lackpolyisocyanats auf der Basis von 1,6-Diisocyanatohexan (HDI) (Desmodur N3300, Bayer AG) mit einem NCO-Gehalt von 21,4 Gew.-%, einer Viskosität bei 23°C von ca. 3000 mPas und einer Funktionalität von ca. 3,5 sowie 98 g (0,6 Val) Benzyl-tert.-butylamin werden in 215 g Butylacetat zur Reaktion gebracht. Die Temperatur steigt hierbei auf ca. 40°C an. Die Reaktion ist in weniger als zwei Stunden beendet. Der blockierte NCO-Wert beträgt 5,86 %. Das auf diese Weise erhaltene blockierte Isocyanat wurde für die Herstellung von Lackfilmen herangezogen.

| | |
|---|---|
| Desmophen^{®} A 870 (Bayer AG), 70 % in BA | 8,9 g |
| Blockiertes Polyisocyanat aus Beispiel 1, 50 % in BA | 99,8 g |
| Baysilone^{®} OL 17 (Bayer AG), 10 % in MPA | 1,1 g |
| Modaflow^{®} (Solutia Inc.), 1 % in MPA | 1,1 g |
| Tinuvin^{®} 292 (Ciba AG, Lampertheim), 10 % in MPA | 10,5 g |
| Tinuvin^{®} 1130 (Ciba AG, Lampertheim), 10 % in MPA | 21,0 g |
| K-KAT 348^{®} (King Industries), 25 % in MPA | 6,3 g |
| MPA/SN^{®} 100(1:1) | 1,3 g |
| gesamt | 220,0 g |
| | |
| Festkörpergehalt: 50,0 % | |

Ergebnisse: Der Vergleich des mit dem erfindungsgemäßen Blockierungsmittel blockierten Polyisocyanats erfolgt einem Polyisocyanat VP LS 2253 (Bayer AG), bei dem es sich um ein mit Dimethylpyrazol blockiertes Polyisocyanat (Desmodur^{®} N 3300, Bayer AG, gelöst in MPA/Solvent Naphta) handelt.

**Tabelle 1: Vergleich von tert.-butyl-benzyl-Amin blockierten Polyisocyanaten mit 3,5-Dimethylpyrazol blockierten Polyisocyanaten:**

| **Bezeichnung** | **Beispiel 1** | | **Vergleichsbeispiel: VP LS 2253** |
|---|---|---|---|
| **Zusammensetzung** | 27,2% N 3300 | | 49,9% N 3300 |
| | 22,8% N-Benzyl-tert.- butylamin | | 25,1% DMP |
| | 50,0% Butylacetat | | 8,3% MPA |
| | | | 16,7% SN 100 |
| **Lieferform** | 50% in BA | | 75% in MPA/SN 100 (8:17) |
| **PIC-Basis** | N 3300 | | N 3300 |
| **Blockierungsmittel** | N-Benzyl-tert.-butylamin | | 3,5-Dimethylpyrazol |
| **Polyol** | **A 870** | | **A 870** |
| **Katalysator** | 1,5% K-Kat 348 | | 1,0% DBTL |
| **Spritzfestkörpergehalt** [%] | 50,0 | | 50,0 |
| **Auslaufzeit ISO-5-Becher** [s] | 21 | | 22 |
| **Visuelle Beurteilung des Lackes** | klar | | klar |
| **Einbrennbedingungen** | 30' 120°C | 30' 140°C | 30' 140°C |
| **Visuelle Beurteilung des Lackfilmes** | i.O. | i.O | i.O. |
| **Pendeldämpfung** n. König | 128 | 137 | 129 |
| [Schwingungen] [s] | 179 | 192 | 181 |
| **Lösemittelbeständigkeit** | | | |
| (X/MPA/EA/Ac) [Note]¹⁾ | | | |
| 1 min. | 1 1 2 3 | 0 0 2 3 | 1 1 2 3 |
| 5 min. | 2 2 4 4 | 2 2 4 4 | 2 2 4 4 |
| **Erichsentiefung** [mm] | 10,0 | 9,5 | 3,5 |
| **Chemikalienbeständigkeit** [°C] (Gradientenofen) | | | |
| Baumharz | 40 | 42 | 36 |
| Bremsflüssigkeit | 36 | 36 | 36 |
| Pankreatin, 50% | 36 | 36 | 36 |
| NaOH, 1% | 47 | 49 | 46 |
| H₂SO₄, 1% | 43 | 45 | 43 |
| FAM, 10 min. [Note]¹⁾ | 0 | 0 | 2 |
| **Kratzfestigkeit** (Amtec Kistler-Laborwaschanlage)²⁾ | | | |
| Ausgangsglanz 20° | 91,4 | 91,4 | 91,3 |
| Glanzverlust (ΔGI.) nach 10 | 12,1 | 11,7 | 14,5 |
| Waschzyklen 20° | | | |
| Relativer Restglanz [%] | 86,8 | 87,2 | 84,1 |
| **Thermovergilbung *Klarlack auf LM-Basislack*** | | | |
| Ausgangsvergilbung [b] | 3,6 | 3,5 | 3,3 |
| Überbrennvergilbung bei 30' 110°C [Δb] | 0,5 | 0,8 | 0,5 |
| Überbrennvergilbung bei 30' 140°C [Δb] | 2,4 | 2,6 | 2,3 |
| Überbrennvergilbung bei 30' 160°C [Δb] | 0,1 | 0,7 | 0,2 |

| | | | |
|---|---|---|---|
| ¹⁾ 0 - gut; 5 - schlecht | | | |

### Beispiel 2 (Herstellung eines lösungsmittelhaltigen Polyisocyanat-Vernetzers)

24,7 g (0,07 Val) eines handelsüblichen isocyanurathaltigen Lackpolyisocyanats auf der Basis von 1-Isocyanato-3,5,5-trimethyl-5-isocyanatomethylcyclohexan (Isophorondiisocyanat, IPDI) (Handelsprodukt Desmodur^{®} Z 4470 der Bayer AG) mit einem NCO-Gehalt von 11,9 Gew.-%, einer Viskosität bei 23°C von ca. 600 mPas sowie 11,4 g (0,07 Val) Benzyl-tert.-butylamin werden in 15,5 g Butylacetat zur Reaktion gebracht. Die Temperatur steigt hierbei auf ca. 40°C an. Die Reaktion ist in weniger als zwei Stunden beendet. Der blockierte NCO-Wert beträgt 5,7 %. Das auf diese Weise erhaltene blockierte Isocyanat wurde für die Herstellung von Lackfilmen herangezogen.

### Beispiel 3 (Herstellung eines lösungsmittelhaltigen Polyisocyanat-Vernetzers)

117 g (0,6 Val) eines isocyanurathaltigen Lackpolyisocyanats auf der Basis von 4,4'-Diisocyanatodicyclohexylmethan (Desmodur^{®} W, Bayer AG, Herstellung untenstehend beschrieben) mit einem NCO-Gehalt von 15,1 % Gew.-% (Feststoff, Schmelzpunkt ca. 100°C) und einer Funktionalität von ca. 3,5 sowie 98 g (0,6 Val) Benzyl-tert.-butylamin werden in 215 g Butylacetat zur Reaktion gebracht. Die Temperatur steigt hierbei auf ca. 40°C an. Die Reaktion ist in weniger als zwei Stunden beendet. Der blockierte NCO-Wert beträgt 4,47 %. Das auf diese Weise erhaltene blockierte Isocyanat wurde für die Herstellung von Lackfilmen herangezogen.

Die Herstellung des Trimers des 4,4'-Diisocyanatodicyclohexylmethans erfolgt auf folgende Art und Weise: 2620 g 4,4'-Diisocyanatodicyclohexylmethan werden bei 60°C mit 6 g einer 10 %igen Katalysatorlösung von Trimethyl-benzylammoniumhydroxid, gelöst in 2-Ethylhexanol : Methanol =5 : 1, bei einer Temperatur von 60 bis 75°C bis zu einem NCO-Gehalt von 26,8 % trimerisiert. Zur Beendigung der Trimerisierungsreaktion werden 0,5 g Bis(2-ethylhexyl)phosphat hinzugegeben. Nun wird die klare Rohlösung mit 130 g eines Isocyanuratpolyisocyanats auf Basis von Diisocyanatohexan (HDI), das nach Beispiel 12 der EP-A 330 966 erhalten wurde, versetzt und bei 200°C/0,15mbar durch Dünnschichtdestillation monomeres 4,4'-Diisocyanato-dicyclohexylmethan abgetrennt. Man erhält ein helles, leicht gelbliches Festharz mit einem NCO-Gehalt von 15,1 %, einem Schmelzpunkt von ca. 100°C, einem Gehalt an monomerem Diisocyanat von < 0,2 % und einer aus dem NCO-Gehalt berechneten durchschnittlichen NCO-Funktionalität von 3,5. Das Festharz wird anschließend 70 %ig in Butylacetat gelöst.

### Beispiel 4 (Vergleichsbeispiel I)

Es wurde gearbeitet wie in Beispiel 2 beschrieben, jedoch wurde anstelle von N-Benzyl-tert.-butylamin Butanonoxim eingesetzt. Die erhaltene Dispersion besaß nachfolgende Eigenschaften:

| | |
|---|---|
| Festköpergehalt: | 38 % |
| pH-Wert: | 8,5 |
| Viskosität (23°C): | 4000 mPas |
| Partikelgröße (LKS) | 42 nm |

## Patentansprüche

1. Blockierte Polyisocyanate und selbstvernetzende Einkomponenten-Einbrennsysteme auf Polyurethanbasis der Formel (I) 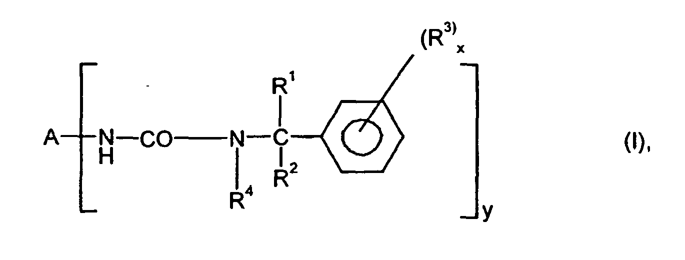 worin
A den Rest eines Polyisocyanats bedeutet,
R¹, R², R³ gleich oder verschieden sein können und Wasserstoff, C₁-C₄₋Alkyl oder Cycloalkyl bedeuten, wobei Wasserstoff bevorzugt ist, und
R⁴ C₁-C₄-Alkyl, C₆-C₁₀-Cycloalkyl oder C₇-C₁₄-Aralkyl, bevorzugt Methyl, Ethyl, Isopropyl und tert.-Butyl, besonders bevorzugt tert.-Butyl bedeuten,
x für die Zahl 1, 2, 3, 4 oder 5 steht und
y eine Zahl von 1 bis 8, bevorzugt 2 bis 6, besonders bevorzugt 2,5 bis 4,0 bedeutet,
entspricht.

2. Verfahren zur Herstellung der blockierten Polyisocyanate gemäß Anspruch 1 **dadurch gekennzeichnet, dass** Polyisocyanate mit sekundären Aminen der Formel (II) 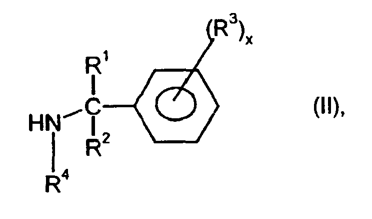 worin R¹,R², R³, und R⁴ und x die in Anspruch 1 bei Formel (I) genannte Bedeutung haben,
umgesetzt werden.

3. Blockierte Polyisocyanate und selbstvernetzende Einkomponenten-Einbrennsysteme gemäß Ansprüchen 1 und 2 **dadurch gekennzeichnet, dass** als sekundäres Amin N-Benzyl-tert.-butylamin verwendet wird.

4. Blockierte Polyisocyanate und selbstvernetzende Einkomponenten-Einbrennsysteme gemäß Anspruch 1 **dadurch gekennzeichnet, dass** sie als Lösung in organischen Lösemitteln vorliegen.

5. Verwendung der blockierten Polyisocyanate gemäß Anspruch 1 zur Herstellung von Lacken, Farben und anderen Einbrennsystemen wie Klebstoffen und Elastomeren.

6. Verwendung der blockierten Polyisocyanate gemäß Anspruch 1 als Vernetzer für Polyolkomponenten.

## Claims

1. Blocked polyisocyanates and self-crosslinking one-component stoving systems on a polyurethane basis having the formula (I) 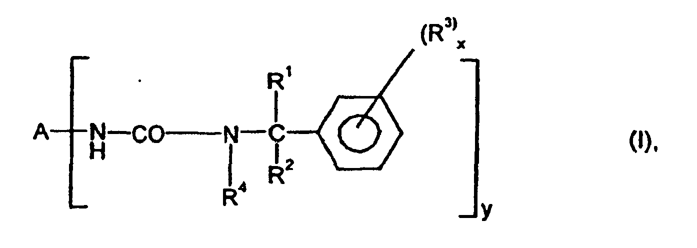 wherein
A denotes the radical of a polyisocyanate,
R¹, R², R³ can be the same or different and denote hydrogen, C₁ to C₄ alkyl or cycloalkyl, hydrogen being preferred, and
R⁴ denotes C₁ to C₄ alkyl, C₆ to C₁₀ cycloalkyl or C₇ to C₁₄ aralkyl, preferably methyl, ethyl, isopropyl and tert-butyl, particularly preferably tert-butyl,
x stands for the number 1, 2, 3, 4 or 5 and
y denotes a number from 1 to 8, preferably 2 to 6, particularly preferably 2.5 to 4.0.

2. Process for producing blocked polyisocyanates according to claim 1, **characterised in that** polyisocyanates are reacted with secondary amines having the formula (II) 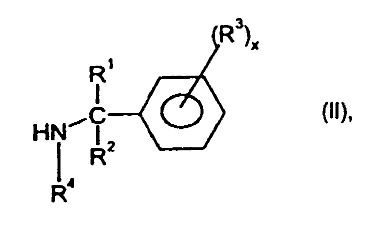 wherein R¹, R², R³ and R⁴ and x have the meaning cited in claim 1 for formula (I).

3. Blocked polyisocyanates and self-crosslinking one-component stoving systems according to claims 1 and 2, **characterised in that** N-benzyl tert-butylamine is used as the secondary amine.

4. Blocked polyisocyanates and self-crosslinking one-component stoving systems according to claim 1, **characterised in that** they are present as a solution in organic solvents.

5. Use of the blocked polyisocyanates according to claim 1 for the production of coatings, paints and other stoving systems such as adhesives and elastomers.

6. Use of the blocked polyisocyanates according to claim 1 as crosslinkers for polyol components.

## Revendications

1. Polisocyantes bloqués et produits auto-réticulants, à un seul composant, à cuire au four, à base de polyuréthannes, répondant à la formule (I) 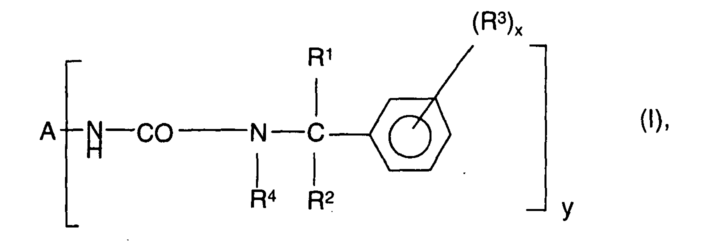 dans laquelle
A représente le radical d'un polyisocyanate,
R¹, R², R³, ayant des significations identiques ou différentes, représentent chacun l'hydrogène, un groupe alkyle en C₁-C₄ ou cycloalkyle, de préférence l'hydrogène,
R⁴ représente un groupe alkyle en C₁-C₄, cycloalkyle en C₆-C₁₀ ou aralkyle en C₇-C₁₄, de préférence un groupe méthyle, éthyle, isopropyle, ou tert.-butyle, plus spécialement ce dernier,
x est égal à 1, 2, 3, 4 ou 5, et
y est un nombre allant de 1 à 8, de préférence de 2 à 6 et plus spécialement de 2,5 à 4,0.

2. Procédé pour la préparation des polyisocyanates bloqués selon la revendication 1, **caractérisé en ce que** l'on fait réagir des polyisocyanates avec des amines secondaires de formule (II) 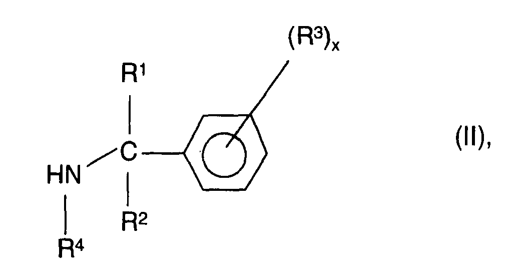 dans laquelle R¹, R², R³ et R⁴ et x ont les significations indiquées en référence à la formule (I) dans la revendication 1.

3. Polyisocyanates bloqués et produits auto-réticulants, à un seul composant, à cuire au four, selon les revendications 1 et 2, **caractérisés en ce que** l'amine secondaire utilisée est la N-benzyl-tert.-butylamine.

4. Polyisocyanates bloqués et produits auto-réticulants, à un seul composant, à cuire au four, selon la revendication 1, **caractérisés en ce qu'**ils sont en solution dans des solvants organiques.

5. Utilisation des polyisocyanates bloqués selon la revendication 1 pour la préparation de vernis, peintures et autres produits à cuire au four tels que des adhésifs et des élastomères.

6. Utilisation des polyisocyanates bloqués selon la revendication 1, en tant qu'agents réticulants pour des composants polyols.
